# EUROPEAN PATENT SPECIFICATION

(11) **EP 0 585 271 B1**
(45) Date of publication and mention of the grant of the patent: **13.11.1996**
(21) Application number: 92909608.9
(22) Date of filing: 13.05.1992
(51) Int. Cl.: D03D 1/02, B60R 21/16

(54) **GAS-PERMEABLE FABRIC**
GASDURCHLÄSSIGES GEWEBE
TISSU PERMEABLE AUX GAZ

(30) Priority: 15.05.1991 GB 9110512
(43) Date of publication of application: 09.03.1994
(73) Proprietor: AIRBAGS INTERNATIONAL LIMITED, Congleton, CW12 1EF (GB)
(72) Inventor: PINEDA, Fransesc, Congleton, Cheshire CW12 3RR (GB); KAVANAGH, Christopher, Congleton, Cheshire (GB); GRAHAM, Raymond, Bradford, West Yorkshire (GB); VALKENBURG, Simon, Macclesfield, Cheshire (GB)
(74) Representative: Wharton, Peter Robert
(86) International application number: GB9200856
(87) International publication number: WO9220847

(56) References cited:
- EP-A- 0 477 521
- WO-A-90/09295

## Description

This invention relates to a method of producing a gas-permeable fabric, particularly for use in the manufacture of inflatable airbags for the protection of vehicle occupants in the event of a collision.

Such airbags are stored in front of the respective occupants of a vehicle and are arranged to be inflated almost instantaneously in the event of a collision and to immediately commence to deflate, so as to temporarily restrain the occupants and thus prevent them from being injured by being thrown against hard internal surfaces within the vehicle. Currently produced airbags tend to be manufactured from fabric coated with a synthetic rubber such as neoprene which makes the fabric impermeable to gases, and the coated fabric is provided with one or more vent holes of different diameters to permit controlled deflation and consequential energy absorption. As inflation is usually effected by pyrotechnic means which generate hot gases and particles, the vent holes are provided in areas of the bag away from the vehicle occupant to allow the gases to escape without causing thermal injuries to the occupant or thermal damage to the fabric. The larger the area of venting through the fabric, the lower the thermal stress and risk of failure of the fabric through heat. The bags may be woven in one piece, or manufactured by sewing or adhering the edges of two pieces of fabric together.

New developments with uncoated fabrics aim to facilitate the production of airbags and make them stowable in a smaller space. These developments control the permeability of the bag by means of yarn type, weave construction, weaving density, or a combination of these systems. However, fabrics produced to certain specifications by these systems have different properties which can have a negative effect on airbags manufactured therefrom. The properties adversely affected may be sewability, seam strength, fabric strength, fabric thickness, fabric weight, dimensional stability, and permeability.

EP-A-0477521 (prior art under Article 54(3)EPC) discloses an airbag made from a fabric having a different weave pattern in different areas. However the fabric properties also vary according to the weave pattern.

WO 90/09295 discloses an airbag woven mainly from a 1/1 or hopsack weave. A higher pemeability vert area may be provided by including an area of 3/3 weave.

The object of the present invention is to produce fabrics with the same properties throughout whilst allowing variations in permeability in different areas.

According one aspect of the invention an airbag formed at least in part from a gas-permeable fabric formed by weaving a plain or hopsack pattern with up to one in five missing or interchanged binding points.

Preferably, the degree of permeability in certain areas of the fabric is varied by increasing or decreasing the incidence of missing binding points.

Preferably, also there are no missing binding points in certain areas of the fabric.

Not more than one out of five binding points are missing so as to maintain the stability of the fabric.

The fabric may be woven on a jacquard loom.

Alternatively, the fabric may be woven on a shaft loom.

A one-piece airbag may be manufactured from fabric produced in accordance with any one of said methods by weaving upper and lower webs of fabric simultaneously whilst causing the two webs of fabric to be woven together in selected areas to define a continuous seam of a desired shape.

Alternatively, an airbag is manufactured from two separate webs of fabric produced in accordance with any one of said methods by sewing or adhering the edges of the two webs of fabric together to form a continuous joint of a desired shape.

In an airbag according to either of the preceding two paragraphs, the degree of permeability of each of the two webs of fabric may be varied.

Alternatively, in an airbag according to either of said paragraphs, the degree of permeability in certain areas of one or both of the two webs of fabric is varied.

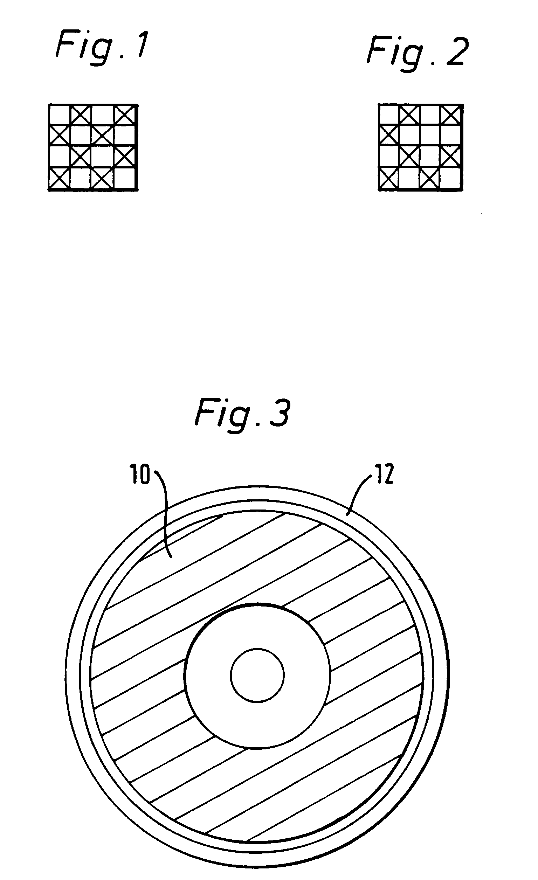

The invention will now be further described, by way of example only, with reference to the accompanying drawings of which :-
Figure 1 illustrates diagrammatically a conventional plain weave pattern;
Figure 2 illustrates diagrammatically a plain weave pattern with a missing binding point;
Figure 3 shows a web of fabric with a shaded egg-shaped area of different permeability;
Figure 4 shows a web of fabric with a shaded cross-shaped area of different permeability; and
Figure 5 is a similar diagram to Figures 1 and 2 illustrating an alternative weave pattern.

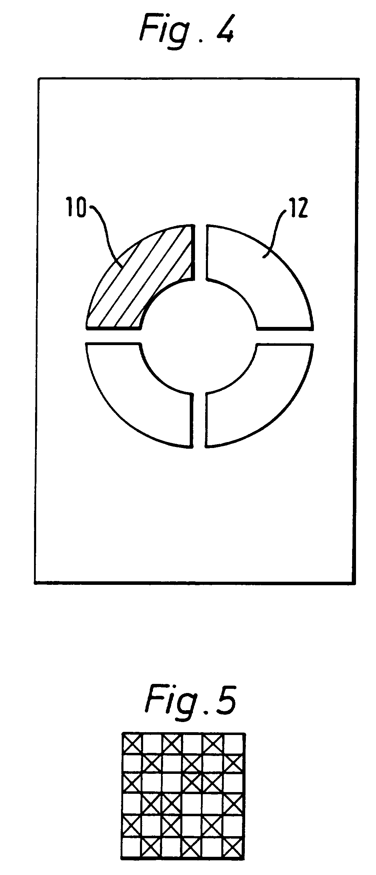

Referring now to the drawings, a web of fabric for use in the manufacture of an airbag, and having an area 10 of higher permeability which is circular as shown in Figure 3 or a quadrant of a circle as shown in Figure 4, is produced by weaving a plain pattern which, at least within the shaded area, has missing binding points as shown in Figure 2. Oval shapes, e.g. egg-shaped, may be employed, as may other shapes such as cross-shaped. The remaining fabric 12 is of lower permeability and may be of ordinary plain weave. The degree of permeability is varied by increasing or decreasing the incidence of missing binding points, but in order to maintain the stability of the fabric not more than one out of five binding points are missing along each weft yarn, and the missing binding points on adjacent weft yarns are staggered. This weaving pattern can be produced on shaft looms or on jacquard looms, and can be based on a plain pattern as described or on a hopsack pattern, with single layer or multilayer fabric. By way example, the permeability of the plain weave portions 12 may be about 5 l/sq dm/min, while that of the portions 10 may be between 20 and 100 l/sq dm/min dependant upon weave pattern.

The circular shapes of figures 3 & 4 are spaced around the centre but are not in the centre. This is especially important for drivers-side airbags since the gas generator is normally placed in the centre.

A one-piece airbag is manufactured as previously proposed by weaving upper and lower webs of fabric simultaneously whilst causing the two webs to be woven together in selected areas to define a continuous seam of a desired shape, for example, circular. The degree of permeability of each of the two webs is varied. For example, the web forming that part of the bag which contacts the vehicle occupant when inflated is of plain weave pattern with no missing binding points, to provide minimal permeability, whereas the web forming that part of the bag having a throat hole for connection to a gas generator is of basically plain weave pattern with an area such as that shown shaded in Figure 3 or Figure 4 having missing binding points to provide increased permeability. The size and shape of said area, and the incidence of missing binding points therein up to a maximum of one in five as aforesaid, are controlled to provide the required rate of deflation of the bag.

A more conventional construction of an airbag is manufactured from two separate webs of fabric by sewing or adhering the edges of the two webs together to form a continuous joint of a desired shape, for example circular. Again, the degree of permeability of each of the two webs is varied. For example, the web forming that part of the bag which contacts the vehicle occupant when inflated is of basically plain weave pattern with a uniformly low incidence of missing binding points to provide low permeability, whereas the web forming that part of the bag having a throat hole for connection to a gas generator is of basically hopsack weave pattern with the area outside that shown shaded in Figure 3 or Figure 4 having a somewhat higher incidence of missing binding points whilst the shaded area has the recommended maximum incidence of one out of five binding points missing. This airbag, by virtue of the permeability of the fabrics employed but not of its two-piece construction, will provide a different rate of deflation than the bag described in the preceding paragraph.

Figure 5 shows a plain weave with interchanged binding points.

The principle may be applied also to a passenger airbag which is conventionally manufactured using three main pieces of fabric, one of which has a hole or holes cut for venting. in this case a complete side piece may have a fabric produced with differential permeability and may utilise any shape of venting area, dependant upon the total area required and shape of the bag.

The advantages of both the airbags hereinbefore described, and of the invention in general, are that areas of low and high permeability have the same strength and weight, and that the fabric produced can readily be combined with other fabrics to obtain a good seam.

## Claims

1. An airbag formed at least in part from a gas-permeable fabric formed by weaving a plain or hopsack pattern with up to one in five missing or interchanged binding points.

2. An airbag as claimed in claim 1 in which the degree of permeability in certain areas of the fabric is varied by increasing or decreasing the incidence of missing binding points.

3. An airbag as claimed in either of claims 1 or 2 in which there are no missing binding points in certain areas of the fabric.

4. An airbag as claimed in any of claims 1 to 3 in which not more than one out of five binding points are missing so as to maintain the stability of the fabric.

5. An airbag as claimed in any of claims 1 to 4 in which the fabric is woven on a jacquard loom.

6. An airbag as claimed in any of claims 1 to 4 in which the fabric is woven on a shaft loom.

7. A method of making an airbag as claimed in any preceding claim in which a one-piece airbag is manufactured from the fabric by weaving upper and lower webs of fabric simultaneously whilst causing the two webs of fabric to be woven together in selected areas to define a continuous seam of a desired shape.

8. A method of making an airbag according to claims 1 to 6 in which an airbag is manufactured from two separate webs of fabric by sewing or adhering the edges of the two webs of fabric together to form a continuous joint of a desired shape.

9. A method as claimed in either of claims 7 or 8 in which the degree of permeability of each of the two webs of fabric is varied.

10. A method as claimed in either of claims 7 or 8 in which the degree of permeability in certain areas of one or both of the two webs of fabric is varied.

## Patentansprüche

1. Airbag, der zumindest teilweise aus einem gasdurchlässigen textilen Flächengebilde gebildet ist, das durch Weben eines Musters mit Leinwandbindung oder Würfelbindung mit bis zu einer fehlenden oder vertauschten Bindestelle von fünf Bindestellen gebildet ist.

2. Airbag nach Anspruch 1,
bei dem der Durchlässigkeitsgrad in bestimmten Bereichen des Gewebes durch Erhöhen oder Verringern des Auftretens von fehlenden Bindestellen variiert ist.

3. Airbag nach Anspruch 1 oder 2,
bei dem es in bestimmten Bereichen des Gewebes keine fehlenden Bindestellen gibt.

4. Airbag nach einem der Ansprüche 1 bis 3,
bei dem nicht mehr als eine von fünf Bindestellen fehlt, um die Stabilität des Gewebes aufrechtzuerhalten.

5. Airbag nach einem der Ansprüche 1 bis 4,
bei dem das Gewebe auf einem Jacquard-Webstuhl gewebt worden ist.

6. Airbag nach einem der Ansprüche 1 bis 4,
bei dem das Gewebe auf einem Schafft-Webstuhl gewebt worden ist.

7. Verfahren zur Herstellung eines Airbags nach einem der vorhergehenden Ansprüche,
bei dem ein einstückiger Airbag aus dem Gewebe dadurch hergestellt wird, daß obere und untere Bahnen des Gewebes gleichzeitig gewebt werden, wobei dafür gesorgt wird, daß die beiden Bahnen des Gewebes in ausgewählten Bereichen zusammengewebt werden, um eine durchgehende Naht mit einer gewünschten Form zu bilden.

8. Verfahren zur Herstellung eines Airbags nach den Ansprüchen 1 bis 6,
bei dem ein Airbag aus zwei separaten Bahnen des Gewebes hergestellt wird, indem die Kanten der beiden Bahnen des Gewebes zusammengenäht oder zusammengeklebt werden, um eine durchgehende Verbindung mit einer gewünschten Form zu bilden.

9. Verfahren nach Anspruch 7 oder 8,
bei dem der Durchlässigkeitsgrad von jeder der beiden Bahnen des Gewebes variiert wird.

10. Verfahren nach Anspruch 7 oder 8,
bei dem der Durchlässigkeitsgrad in bestimmten Bereichen von einer oder von beiden der zwei Bahnen des Gewebes variiert wird.

## Revendications

1. Coussin pneumatique de sécurité formé au moins en partie à partir d'un tissu perméable aux gaz formé en tissant un dessin d'armure uni ou Panama, comprenant au plus un point de liaison manquant sur cinq ou des points de liaisons alternés.

2. Coussin pneumatique de sécurité selon la revendication 1, dans lequel on peut faire varier le degré de perméabilité dans certaines zones du tissu en augmentant ou en réduisant la fréquence des points de liaison manquants.

3. Coussin pneumatique de sécurité selon l'une ou l'autre des revendications 1 ou 2, dans lequel il n'y a aucun point de liaison manquant dans certaines zones du tissu.

4. coussin pneumatique de sécurité selon l'une quelconque des revendications 1 à 3, dans lequel au plus un point de liaison sur cinq est manquant, de façon à maintenir la stabilité du tissu.

5. Coussin pneumatique de sécurité selon l'une quelconque des revendications 1 à 4, dans lequel le tissu est tissé sur un métier Jacquard.

6. coussin pneumatique de sécurité selon l'une quelconque des revendications la 4, dans lequel le tissu est tissé sur un métier droit.

7. Procédé pour fabriquer un coussin pneumatique de sécurité selon l'une quelconque des revendications précédentes, dans lequel un coussin pneumatique de sécurité d'une seule pièce est fabriqué à partir du tissu en tissant les nappes supérieure et inférieure de tissu simultanément, tout en faisant que les deux nappes de tissu soient tissées ensemble dans des zones choisies pour définir un joint continu selon une forme voulue.

8. Procédé pour fabriquer un coussin pneumatique de sécurité selon les revendications 1 à 6, dans lequel un coussin pneumatique de sécurité est fabriqué a partir de deux nappes de tissu distinctes, en cousant ou collant les bords des deux nappes de tissu ensemble pour former une jointure continue selon une forme voulue.

9. Procédé selon l'une ou l'autre des revendications 7 ou 8, dans lequel on fait varier le degré de perméabilité de chacune des deux nappes de tissu.

10. Procédé selon l'une ou l'autre des revendications 7 ou 8, dans lequel on fait varier le degré de perméabilité dans certaines zones de l'une ou des deux nappes de tissu.
